(19) Europäisches Patentamt / European Patent Office / Office européen des brevets

(11) EP 4 312 330 A1

(12) **EUROPÄISCHE PATENTANMELDUNG**

(43) Veröffentlichungstag:
**31.01.2024 Patentblatt 2024/05**

(21) Anmeldenummer: **22187565.1**

(22) Anmeldetag: **28.07.2022**

(51) Internationale Patentklassifikation (IPC):
**H02J 3/00** (2006.01) **H02J 3/14** (2006.01)
**H02J 13/00** (2006.01) **H02J 3/06** (2006.01)

(52) Gemeinsame Patentklassifikation (CPC):
**H02J 3/003; H02J 3/06; H02J 3/14;**
**H02J 13/00032;** H02J 2203/10

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**
Benannte Validierungsstaaten:
**KH MA MD TN**

(71) Anmelder: **Siemens Aktiengesellschaft**
**80333 München (DE)**

(72) Erfinder:
• **Amthor, Arvid**
  **98631 Grabfeld OT Nordheim (DE)**
• **Schreck, Sebastian**
  **90439 Nürnberg (DE)**
• **Schütz, Thomas**
  **90765 Fürth (DE)**
• **Sudhoff, Robin**
  **91052 Erlangen (DE)**

(74) Vertreter: **Siemens Patent Attorneys**
**Postfach 22 16 34**
**80506 München (DE)**

(54) **VERFAHREN UND VORRICHTUNG ZUR STEUERUNG VON ENERGIEAUSTAUSCHEN ZWISCHEN MEHREREN ENERGIESYSTEMEN**

(57) Es wird ein Verfahren zur Steuerung von Energieaustauschen zwischen mehreren Energiesystemen über ein Stromnetz mittels einer bezüglich den Energiesystemen zentralen Steuervorrichtung vorgeschlagen, wobei wenigstens eines der Energiesysteme eine Wärmeerzeugungsanlage umfasst, die elektrische Energie aus dem Stromnetz in Wärme wandelt. Das Verfahren ist gekennzeichnet durch folgende Schritte:

- (S1) Bereitstellen einer elektrischen Lastprognose $p_t^{e}$ für die Wärmeerzeugungsanlage zur Deckung einer vorgesehenen thermischen Last $\dot{q}_t^{thermal}$;
- (S2) Übermitteln der bereitgestellten elektrischen Lastprognose $p_t^{e}$ an die Steuervorrichtung, wobei die weiteren Energiesysteme ebenfalls jeweilige elektrische Lastprognosen an die Steuervorrichtung übermitteln;
- (S3) Ermitteln von zu den Energieaustauschen zugehörigen elektrischen Leistungen $P_t^{e}$ durch die Steuervorrichtung basierend auf den übermittelten vorgesehenen elektrischen Lastprognosen $p_t^{e}$, wobei das Ermitteln durch ein Optimierungsverfahren mittels einem Minimieren einer zugehörigen Zielfunktion erfolgt, und die Zielfunktion derart ausgebildet ist, dass die Anzahl der Starts $y_t^{heat}$ der Wärmeerzeugungsanlage zur Deckung der vorgesehenen thermischen Last $\dot{q}_t^{thermal}$ minimiert wird; und

- (S4) Steuern der Energieaustausche gemäß der ermittelten elektrischen Leistungen $P_t^{e}$ mittels der Steuervorrichtung.

Weiterhin betrifft die Erfindung eine Steuervorrichtung zur Durchführung des Verfahrens.

**(Forts. nächste Seite)**

**Beschreibung**

Die Erfindung betrifft ein Verfahren gemäß dem Oberbegriff des Patentanspruches 1 sowie eine Vorrichtung gemäß dem Oberbegriff des Patentanspruches 10.

Energiesysteme, beispielsweise Stadtviertel, Gemeinden, Gebäude, industrielle Anlagen und dergleichen, umfassen typischerweise verschiedene energietechnische Anlagen, beispielsweise Erzeugungs-, Verbrauchs- und/oder Speicheranlagen. Eine möglichst effiziente Allokation der im Gesamtsystem erzeugten und verbrauchten Energie sowie der Energieaustausche über ein zugehöriges Verteilnetz (Stromnetz) ist eine technische Herausforderung, die beispielsweise mittels eines lokalen Energiemarktes gelöst werden kann. Hierbei wird der lokale Energiemarkt technisch durch eine bezüglich der Energiesysteme zentralen Steuervorrichtung zur Steuerung der Energieaustausche ausgebildet.

Eine solche Steuervorrichtung ist beispielsweise aus dem Dokument EP 3518369 A1 bekannt.

Allerdings sind lokale Energiemärkte grundsätzlich auf elektrische Netze (Stromnetze) ausgerichtet. Hierbei wird typischerweise die Wärmeseite von Energiesystemen, beispielsweise Wohngebäuden, nicht explizit berücksichtigt. Andererseits macht Wärme in etwa 70 Prozent des Energiebedarfs von durchschnittlichen Haushalten aus. Grundsätzlich kann der Bedarf an elektrischer Energie, die für die Wärmeerzeugung verwendet wird, ebenfalls am lokalen Energiemarkt gehandelt werden. Dadurch würden allerdings die zum Erzeugen der Wärme verwendeten Wärmeerzeugungsanlagen wie gewöhnliche elektrische Anlagen im Rahmen des lokalen Energiemarktes betrachtet werden. Bezüglich der Wärmeerzeugungsanlagen spezifische technische Anforderungen bleiben hierbei unberücksichtigt.

Der vorliegenden Erfindung liegt die Aufgabe zugrunde, die Bereitstellung von Wärme durch eine Wärmeerzeugungsanlage verbessert in einen lokalen Energiemarkt zu integrieren.

Die Aufgabe wird durch ein Verfahren mit den Merkmalen des unabhängigen Patentanspruches 1 sowie durch eine Steuervorrichtung mit den Merkmalen des unabhängigen Patentanspruches 10 gelöst. In den abhängigen Patentansprüchen sind vorteilhafte Ausgestaltungen und Weiterbildungen der Erfindung angegeben.

Das erfindungsgemäße Verfahren zur Steuerung von Energieaustauschen zwischen mehreren Energiesystemen über ein Stromnetz mittels einer bezüglich den Energiesystemen zentralen Steuervorrichtung, wobei wenigstens eines der Energiesysteme eine Wärmeerzeugungsanlage umfasst, die elektrische Energie aus dem Stromnetz in Wärme wandelt, ist gekennzeichnet durch wenigstens die folgenden Schritte:

- Bereitstellen einer elektrischen Lastprognose $p_t^{\mathrm{e}}$ für die Wärmeerzeugungsanlage zur Deckung einer vorgesehenen thermischen Last $\dot{q}_t^{\mathrm{thermal}}$ ;

- Übermitteln der bereitgestellten elektrischen Lastprognose $p_t^{\mathrm{e}}$ an die Steuervorrichtung, wobei die weiteren Energiesysteme ebenfalls jeweilige elektrische Lastprognosen an die Steuervorrichtung übermitteln;

- Ermitteln von zu den Energieaustauschen zugehörigen elektrischen Leistungen $P_t^{\mathrm{e}}$ (Sollwerte) durch die Steuervorrichtung basierend auf den übermittelten vorgesehenen elektrischen Lastprognosen $p_t^{\mathrm{e}}$, wobei das Ermitteln durch ein Optimierungsverfahren mittels einem Minimieren einer zugehörigen Zielfunktion erfolgt, und die Zielfunktion derart ausgebildet ist, dass die Anzahl der Starts $y_t^{\mathrm{heat}}$ der Wärmeerzeugungsanlage zur Deckung der vorgesehenen thermischen Last $\dot{q}_t^{\mathrm{thermal}}$ minimiert wird; und

- Steuern der Energieaustausche gemäß der ermittelten elektrischen Leistungen $P_t^{\mathrm{e}}$ mittels der Steuervorrichtung.

Das erfindungsgemäße Verfahren und/oder eine oder mehrere Funktionen, Merkmale und/oder Schritte des erfindungsgemäßen Verfahrens und/oder einer seiner Ausgestaltungen können computergestützt sein. Insbesondere umfasst die Steuervorrichtung eine oder mehrere Recheneinheiten, die dazu ausgebildet und eingerichtet sind, beispielsweise mittels Befehlen, das Optimierungsverfahren numerisch durchzuführen und die zu den Energieaustauschen zugehörigen elektrischen Leistung beziehungsweise Sollleistungen zu ermitteln.

Aus struktureller Sicht definiert insbesondere der IPCC Fifth Assessment Report ein Energiesystem als: "Alle Komponenten, die sich auf die Erzeugung, Umwandlung, Lieferung und Nutzung von Energie beziehen" (Annex I, Seite 1261).

Energiesysteme umfassen typischerweise mehrere Komponenten, insbesondere energietechnische Anlagen, beispielsweise Energiewandlungsanlagen, Verbrauchsanlagen und/oder Speicheranlagen. Hierbei können Energiesysteme mehrere Energieformen erzeugen und/oder bereitstellen (multimodale Energiesysteme). Insbesondere stellt ein solches Energiesystem für einen Verbraucher, beispielsweise ein Gebäude oder Wohngebäude, eine Industrieanlage oder private Anlagen, eine oder mehrere Energieformen bereit, wobei die Bereitstellung insbesondere durch eine Umwandlung verschiedener Energieformen, durch einen Transport verschiedener Energieformen und/oder durch gespeicherte Energieformen erfolgt. Mit anderen Worten werden die verschiedenen Energieformen, beispielsweise Wärme, Kälte oder elektrische Energie, mittels des multimodalen Energiesystems bezüglich ihrer Erzeugung, ihrer Bereitstellung und/oder ihrer Speicherung gekoppelt. Energiesysteme sind beispielsweise Gebäude, insbesondere Wohngebäude und/oder Bürogebäude und/oder industrielle Anlagen.

Als energietechnische Anlage kann das Energiesystem eine oder mehrere der folgenden Komponenten umfassen: Stromgeneratoren, Kraftwärmekopplungsanlagen, insbesondere Blockheizkraftwerke, Gasboiler, Dieselgeneratoren, Wärmepumpen, Kompressionskältemaschinen, Absorptionskältemaschinen, Pumpen, Fernwärmenetzwerke, Energietransferleitungen, Windkrafträder oder Windkraftanlagen, Photovoltaikanlagen, Energiespeicher, insbesondere Batteriespeicher, Biomasseanlagen, Biogasanlagen, Müllverbrennungsanlagen, industrielle Anlagen, konventionelle Kraftwerke und/oder dergleichen.

Dem vorliegenden Verfahren liegen somit mehrere Energiesysteme, beispielsweise Gebäude, die über ein Stromnetz Energie austauschen, zugrunde. Hierbei können die Energiesysteme in das Stromnetz zu einem bestimmten Zeitpunkt eine Leistung einspeisen und/oder ausspeisen. Durch eine für einen bestimmten Zeitbereich in das Stromnetz eingespeiste und/oder ausgespeiste Leistung bildet sich eine bestimmte zwischen den Energiesystemen ausgetauschte Energie beziehungsweise Energiemenge aus, das heißt es erfolgt ein Energieaustausch zwischen den Energiesystemen. Wenigstens eines der Energiesysteme umfasst eine Wärmeerzeugungsanlage, die elektrische Energie zur Bereitstellung beziehungsweise zur Deckung eines Wärmebedarfs ausspeist.

Die Energieaustausche zwischen den Energiesystemen werden mittels der bezüglich der Energiesysteme zentralen Steuervorrichtung gesteuert. Hierbei erfolgt die Steuerung mittels der Steuervorrichtung, welche dazu ausgebildet ist, ein Optimierungsverfahren durchzuführen. Bevorzugt bildet die zentrale Steuervorrichtung einen lokalen Energiemarkt aus.

Ein Optimierungsverfahren im Sinne der vorliegenden Erfindung ist ein numerisches Verfahren, bei welchem Sollwerte für die Leistungen, die den Energieaustauschen zugrunde liegen, ermittelt werden. Die genannten Leistungen beziehungsweise Leistungswerte sind hierbei Variablen einer festgelegten Zielfunktion, die im Rahmen des Optimierungsverfahrens minimiert oder maximiert wird. Durch ein entsprechendes Vorzeichen kann ein Minimieren stets in ein Maximieren übergeführt werden.

Mit anderen Worten legt das Minimum oder Maximum der Zielfunktion die zeitabhängigen Leistungen beziehungsweise ihre Sollwerte für die Steuerung fest. Die Zielfunktion modelliert hierbei typischerweise ein technisches Ziel, welches für die Energieaustausche verfolgt wird, beispielsweise eine bestmögliche Übereinstimmung von Erzeugung und Verbrauch, eine möglichst geringe Kohlenstoffdioxidemission oder einen möglichst großen Energieumsatz. Vorliegend wird die Zielfunktion minimiert und ist derart ausgestaltet, dass die Anzahl der Starts der Wärmeerzeugungsanlage, die zur Deckung des Wärmebedarfs gegebenenfalls unter Nutzung einer Flexibilität der Wärmeerzeugung, erforderlich sind, minimiert werden. Hierbei bezeichnet der Begriff der Flexibilität eine zeitliche Verschiebbarkeit der Wärmeerzeugung.

Gemäß einem ersten Schritt des erfindungsgemäßen Verfahrens wird eine elektrische Lastprognose $p_t^{\mathrm{e}}$ für die Wärmeerzeugungsanlage zur Deckung einer vorgesehenen thermischen Last $\dot{q}_t^{\mathrm{thermal}}$ bereitgestellt. Die bereitgestellte elektrische Lastprognose gibt hierbei an, welche elektrische Leistung zu welchem Zeitpunkt aus dem Stromnetz durch die Wärmeerzeugungsanlage bezogen werden müsste, um die zeitabhängige vorgesehene thermische Last zu decken. Im Hinblick auf einen lokalen Energiemarkt kann die elektrische Lastprognose einer maximalen (zeitabhängigen) Leistung entsprechen, die das Energiesystem maximal zur Deckung der thermischen Last zu beziehen beabsichtigt. Die Bereitstellung der elektrischen Lastprognose kann beispielsweise durch ein energiesysteminternes Prognosemodul ermittelt werden.

Umfasst beispielsweise das thermische System eines Haushaltes einen thermischen Energiespeicher und eine Wärmeerzeugungsanlage, beispielsweise eine Wärmepumpe und/oder einen elektrischen Boiler, die Wärme aus Strom erzeugt und somit die Domänen Strom und Wärme koppelt, dann kann auch für den Wärmebedarf eines Haushaltes der hierfür erforderliche elektrische Strom optimal am lokalen Energiemarkt beschafft werden. Hierzu wird der zeitliche Verlauf des thermischen Energiebedarfs (thermische Lastprognose) ermittelt und daraus der elektrische Leistungsbedarf (elektrische Lastprognose) zum Betrieb der Wärmeerzeugungsanlage bestimmt.

In einem zweiten Schritt des erfindungsgemäßen Verfahrens wird die bereitgestellte elektrische Lastprognose $p_t^{\mathrm{e}}$ an die Steuervorrichtung übermittelt. Hierbei können die weiteren Energiesysteme ebenfalls eine jeweilige elektrische Lastprognose an die Steuervorrichtung übermitteln. Somit ist der zentralen Steuervorrichtung bekannt, welche (maximalen) Leistungen zu welchen Zeitpunkten durch jedes der Energiesysteme aus dem Stromnetz ausgespeist oder eingespeist werden sollen. Hierbei können weitere Daten/Informationen bezüglich der vorgesehenen Energieaustausche durch die Steuervorrichtung aus den Energiesystemen empfangen werden, insbesondere Informationen über maximale Anschlussleistungen, Vergütungsabsichten bezüglich Einspeisung und/oder Ausspeisungen und/oder Informationen über zeitlich verschiebbare Lasten (Flexibilität). Typischerweise beziehen sich die genannten Informationen sowie die elektrischen und thermischen Lastprognosen auf ein festgelegtes Zeitintervall, beispielsweise einen kommenden Tag, insbesondere den nächsten Tag.

Gemäß einem dritten Schritt des erfindungsgemäßen Verfahrens werden zu den Energieaustauschen zugehörigen elektrischen Leistungen $P_t^e$ durch die Steuervorrichtung basierend auf den übermittelten vorgesehenen elektrischen Lastprognosen $p_t^e$ ermittelt. Hierbei erfolgt das Ermitteln durch ein Optimierungsverfahren mittels einem Minimieren einer zugehörigen Zielfunktion. Die Zielfunktion ist derart ausgebildet, dass die Anzahl der Starts $y_t^{heat}$ der Wärmeerzeugungsanlage zur Deckung der vorgesehenen thermischen Last $\dot{q}_t^{thermal}$ minimiert wird.

Hierbei umfasst die Zielfunktion die elektrischen Leistungen $P_t^e$ sowie die Anzahl der Starts $y_t^{heat}$ als Variablen, deren Werte durch das Minimieren der Zielfunktion ermittelt werden. Die Zielfunktion kann weitere technische Ziele modellieren, beispielsweise eine möglichst geringe Gesamtkohlenstoffdioxidemission, einen möglichst hohen Energieumsatz und/oder möglichst geringe Gesamtkosten.

Durch das erfindungsgemäße Minimieren der Starts der Wärmeerzeugungsanlage wird die vorgesehene Wärmelast unter Berücksichtigung von Flexibilitäten (zeitliche Verschiebbarkeit der Erzeugung) möglichst effizient im Hinblick auf den Verschleiß der Wärmeerzeugungsanlage erzeugt. Das ist deshalb der Fall, da typische Wärmeerzeugungsanlagen mit der Anzahl ihrer Starts altern, das heißt verschleißen. Das vorliegende Verfahren ermöglicht somit einen bezüglich des Verschleißes optimierten Betrieb der Wärmeerzeugungsanlagen. Dadurch werden diese verbessert in einen lokalen Energiemarkt integrierbar, da ihre spezifischen technischen Anforderungen verbessert berücksichtigt werden.

In einem vierten Schritt des vorliegenden Verfahrens werden die Energieaustausche gemäß der ermittelten elektrischen Leistungen $P_t^e$ mittels der Steuervorrichtung gesteuert. Hierbei erfolgt die Steuerung typischerweise mittelbar durch die Steuervorrichtung. Die Steuervorrichtung hat mittels der durchgeführten Optimierung Sollwerte (ermittelte elektrische Leistungen) für die Leistungen jedes Energiesystems ermittelt. Diese Sollwerte werden dann an die jeweiligen Energiesysteme übermittelt. Innerhalb der Energiesysteme werden die Sollwerte der Leistungen durch lokale Steuereinheiten und/oder lokale Regeleinheiten umgesetzt, die entsprechende Steuersignale an die jeweiligen Anlagen, insbesondere die Wärmeerzeugungsanlage, übermitteln.

Die vorliegende Erfindung weist insbesondere einen oder mehrere der folgenden Vorteile auf:

- Eine effizientere Möglichkeit, Angebote/Gebote für Wärmeerzeugungsanlagen, insbesondere Wärmepumpen und/oder elektrische Boiler, an einem lokalen Energiemarkt einzustellen.
- Eine Ausnutzung von Flexibilitätspotentialen thermischer Energiesysteme.
- Eine Kosteneinsparung für die einzelnen Energiesysteme durch optimalen Energieeinkauf und geringeren Verschleiß.
- Eine Möglichkeit der Flexibilitätsvermarktung und damit eine Möglichkeit der Erschließung eines zusätzlichen Erlösstromes für das Energiesystem. Dies kann erreicht werden, wenn beispielsweise der elektrische Bedarf der Wärmeerzeugungsanlagen zum Zeitpunkt erhöhter Einspeisung durch erneuerbare Energieerzeugung im Gesamtsystem und somit zu niedrigen Preisen bedient wird. Der Einsatz der flexiblen Wärmebereitstellung durch die Wärmeerzeugungsanlage, insbesondere wenn ein thermischer Energiespeicher vorhanden ist, stellt hierbei eine Systemdienstleistung bereit (negative Regelleistung), die entsprechend vom Netzbetreiber honoriert werden könnte.
- Eine verbesserte Ressourcenbewirtschaftung erneuerbarer Energien durch Nutzung des Verschiebepotentials von thermischen Energiespeichern. Dies kann erreicht werden, wenn beispielsweise der elektrische Bedarf des betrachteten thermischen Systems zum Zeitpunkt erhöhter Einspeisung durch erneuerbare Energieerzeugung bedient und somit der Nutzungsgrad erneuerbarer Erzeugung gesteigert wird. Alternativ könnte die Wärmeerzeugungsanlage aufgrund von Netzüberlastungen abgeregelt werden und die potenziell mögliche Wärmeerzeugung würde in dieser Zeit verloren gehen.
- Eine Erhöhung der Nachhaltigkeit des gesamten Energiesystems, da das Flexibilitätspotenzial von thermischen Energiespeichern nutzbar gemacht wird. Dadurch kann zusätzlicher Netzausbau vermieden werden ohne zusätzliche Installation neuer Speichersysteme. Dies kann beispielsweise erreicht werden, wenn der elektrische Bedarf der Wärmeerzeugungsanlagen zum Zeitpunkt erhöhter Einspeisung durch erneuerbare Energieerzeugung im Gesamtsystem und somit zu niedrigen Preisen bedient wird. Dadurch können zum einen Einspeisungsspitzen abgefangen werden. Zum anderen wird die elektrische Leistung der Wärmeerzeugungsanlagen an Zeiten erhöhten Verbrauchs, beispielsweise in den Morgenstunden und/oder Abendstunden, reduziert und somit Lastspitzen vermieden.

Die erfindungsgemäße Steuervorrichtung zur Steuerung von Energieaustauschen zwischen mehreren Energiesystemen über ein Stromnetz, wobei wenigstens eines der Energiesysteme eine Wärmeerzeugungsanlage umfasst, die elektrische Energie aus dem Stromnetz in Wärme wandelt, ist dadurch gekennzeichnet, dass die Steuervorrichtung dazu ausgebildet und eingerichtet ist:

- eine für die Wärmeerzeugungsanlage bereitgestellte elektrische Lastprognose $p_t^e$ zur Deckung einer vorgesehenen thermischen Last $\dot{q}_t^{thermal}$ zu empfangen sowie weitere jeweilige elektrische Lastprognosen von den weiteren Energiesystemen zu empfangen;

- zu den Energieaustauschen zugehörige elektrische Leistungen $P_t^e$ basierend auf den übermittelten vorgesehenen elektrischen Lastprognosen $p_t^e$ zu ermitteln, wobei das Ermitteln durch ein Optimierungsverfahren mittels einem Minimieren einer zugehörigen Zielfunktion erfolgt, und die Zielfunktion derart ausgebildet ist, dass die Anzahl der Starts $y_t^{heat}$ der Wärmeerzeugungsanlage zur Deckung der vorgesehenen thermischen Last $\dot{q}_t^{thermal}$ minimiert wird; und

- die Energieaustausche gemäß der ermittelten elektrischen Leistungen $P_t^e$ zu steuern.

Es ergeben sich zum erfindungsgemäßen Verfahren gleichartige, gleichwertige und gleichwirkende Vorteile und/oder Ausgestaltungen der erfindungsgemäßen Steuervorrichtung.

Gemäß einer vorteilhaften Ausgestaltung der Erfindung ist die Wärmeerzeugungsanlage als Wärmepumpe ausgebildet.

Vorteilhafterweise kann dadurch der Verschleiß von Wärmepumpen deutlich reduziert werden. Das ist deshalb der Fall, da Wärmepumpen insbesondere mit der Anzahl ihrer Starts beziehungsweise Kompressorstarts verschleißen. Je öfter diese anspringt, das heißt startet, desto höher ist ihr Verschleiß. Allerdings erfordert eine bestmögliche Nutzung der Flexibilität der Wärmeerzeugung und somit des Betriebes der Wärmeerzeugungsanlage typischerweise ein mehrfaches Starten und Stoppen der Wärmeerzeugungsanlage. Vorliegend wird es somit möglich, Wärme bereitzustellen beziehungsweise eine Wärmelast wenigstens teilweise zu decken und gleichzeitig den Verschleiß in Verbindung mit der durch die Wärmepumpe bereitgestellten zeitlichen Flexibilität für die Wärmeerzeugung zu reduzieren.

Alternativ oder ergänzend kann die Wärmeerzeugungsanlage als Wasserboiler ausgebildet sein.

In einer vorteilhaften Weiterbildung der Erfindung wird die elektrische Lastprognose $p_t^e$ aus einer thermischen Lastprognose $\dot{q}_t^{thermal}$ gemäß $p_t^e = \dot{q}_t^{thermal}/COP_t$ ermittelt, wobei $COP_t$ die Leistungszahl der Wärmepumpe ist.

Vorteilhafterweise ist typischerweise die Leistungszahl der Wärmepumpe bekannt, sodass die elektrische Lastprognose effizient und ausreichend näherungsweise über den oben genannten Zusammenhang ermittelt werden kann. Das Ermitteln der elektrischen Lastprognose kann durch das Energiesystem selbst und/oder durch die Steuervorrichtung durchgeführt werden.

Gemäß einer vorteilhaften Ausgestaltung der Erfindung wird eine Außentemperatur erfasst und die Leistungszahl $COP_t$ in Abhängigkeit der erfassten Außentemperatur bestimmt.

Dadurch kann vorteilhafterweise die Abhängigkeit der Wärmebereitstellung beziehungsweise Wärmeerzeugung von der Außentemperatur berücksichtigt werden. Insbesondere ist dies für Wärmepumpen vorteilhaft, die Luft als Wärmequelle verwenden. Somit kann der Einfluss der Wärmequelle berücksichtigt werden.

In einer vorteilhaften Weiterbildung der Erfindung umfasst die Zielfunktion einen Term der Form $\xi^{wear} \cdot \sum_t y_t^{heat}$ zur Minimierung der Anzahl der Starts $y_t^{heat}$, wobei $\xi^{wear}$ ein Verschleißfaktor und $y_t^{heat}$ als binäre Variable ausgebildet ist, die die Anzahl der Starts kennzeichnet.

Hierbei kann die Zielfunktion weitere Terme, die minimiert werden, umfassen. Beim Optimierungsverfahren wird dann die gesamte Zielfunktion minimiert. Die Binärvariable $y_t^{\text{heat}}$ weist einen ersten und zweiten Wert auf, bevorzugt die Werte 0 und 1, wobei ihr typischerweise zeitabhängiger Wert durch das Minimieren der Zielfunktion ermittelt wird. Somit gibt $y_t^{\text{heat}}$ an, zu welchem Zeitpunkt die Wärmeerzeugungsanlage, insbesondere die Wärmepumpe, startet.

Gemäß einer vorteilhaften Ausgestaltung der Erfindung werden weitere binäre Variablen $x_t^{\text{heat}}$ und $z_t^{\text{heat}}$ beim Optimierungsverfahren verwendet, wobei $x_t^{\text{heat}}$ den Betriebsstatus der Wärmeerzeugungsanlage und $z_t^{\text{heat}}$ die Anzahl der Stopps der Wärmeerzeugungsanlage kennzeichnet, und die Nebenbedingungen $x_t^{\text{heat}} - x_{t-1}^{\text{heat}} = y_t^{\text{heat}} - z_t^{\text{heat}}$ und $y_t^{\text{heat}} + z_t^{\text{heat}} \leq 1$ beim Optimierungsverfahren verwendet werden.

Dadurch kann vorteilhafterweise das Optimierungsverfahren verbessert werden. Mit anderen Worten werden durch die genannten beim Optimierungsverfahren verwendeten Nebenbedingungen die Starts und Stopps der Wärmeerzeugungsanlage, insbesondere der Wärmepumpe, ermittelbar. Durch die weiteren Binärvariablen können vorteilhafterweise weitere technische Anforderungen der Wärmeerzeugungsanlage, wie beispielsweise Mindesteinschaltzeiten und/oder Mindestausschaltzeiten der Wärmeerzeugungsanlage durch $\sum_{i=t-\Delta t^{\text{run,min}}}^{t} y_t^{\text{heat}} \leq x_t^{\text{heat}}$ beziehungsweise $\sum_{i=t-\Delta t^{\text{down,min}}}^{t} z_t^{\text{heat}} \leq 1 - x_t^{\text{heat}}$ beim Optimierungsverfahren als Nebenbedingung verwendet und somit berücksichtigt werden.

In einer vorteilhaften Weiterbildung der Erfindung umfasst das Energiesystem zusätzlich einen mit der Wärmeerzeugungsanlage thermisch gekoppelten Wärmespeicher, wobei die Zielfunktion derart ausgebildet ist, dass Speicherverluste des Wärmespeichers minimiert werden.

Vorteilhafterweise können dadurch Speicherverluste von thermischen Energiespeichern minimiert werden. Hierbei kann das System aus Wärmeerzeugungsanlage und thermischem Energiespeicher durch $\dot{Q}_t^{\text{thermal}} + \dot{Q}_t^{\text{storage,charge}} = \dot{Q}_t^{\text{heat}} + \dot{Q}_t^{\text{storage,discharge}}$ modelliert werden, wobei $\dot{Q}_t^{\text{thermal}}$ die thermische Last, $\dot{Q}_t^{\text{storage,charge}}$ die thermische Ladeleistung des Speichers, $\dot{Q}_t^{\text{heat}}$ die durch die Wärmeerzeugungsanlage erzeugte Wärmeleistung und $\dot{Q}_t^{\text{storage,discharge}}$ die thermische Entladeleistung des Speichers kennzeichnet.

Weiterhin kann der thermische Energiespeicher durch

$$E_t^{\text{storage}} = E_{t-1}^{\text{storage}} + \Delta t \left( \eta_1 \dot{Q}_t^{\text{storage,charge}} - \frac{\dot{Q}_t^{\text{storage,discharge}}}{\eta_2} - \dot{Q}_t^{\text{storage,loss}} \right)$$

modelliert werden. Hierbei ist $E_t^{\text{storage}}$ der Energieinhalt des Speichers, $\Delta t$ eine Zeitschrittweite, $\eta_1$ ein Ladewirkungsgrad und $\eta_2$ ein Entladewirkungsgrad. Die Verluste des Speichers durch Selbstentladung werden durch $\dot{Q}_t^{\text{storage,loss}}$ modelliert. Das Modell ist flexibel verwendbar und bietet eine ausreichende Genauigkeit für unterschiedliche Speichertechnologien. Konstante Parameter, wie beispielsweise die genannten Wirkungsgrade, können durch historische Messdaten bestimmt werden. Durch weitere Messungen kann der Energieinhalt des Speichers, beispielsweise durch vorhandene Temperaturfühler, abgeschätzt werden.

Die Verluste durch Selbstentladung werden vereinfacht durch $\dot{Q}_t^{\text{storage,loss}} = \varphi^{\text{storage}} E_{t-1}^{\text{storage}} / \Delta t$ beschrieben, wobei der Verlustkoeffizient $\varphi^{\text{storage}}$ durch historische Messdaten abgeschätzt werden kann.

Der maximale und minimale Speicherinhalt sowie die maximalen Lade- und Entladeleistungen können durch Systemparameter, wie beispielsweise maximale und minimale Vor- und Rücklauftemperaturen sowie Größe der Anschlussleitungen, abgeschätzt werden. Diese begrenzen die entsprechenden Größen gemäß

$$E^{storage,min} \leq E_t^{storage} \leq E^{storage,max}, \quad \dot{Q}^{storage,charge,min} \leq \dot{Q}_t^{storage,scharge} \leq \dot{Q}^{storage,charge,max}$$

sowie $\dot{Q}^{storage,discharge,min} \leq \dot{Q}_t^{storage,discharge} \leq \dot{Q}^{storage,discharge,max}$. Diese Nebenbedingungen können beim Optimierungsverfahren verwendet werden.

Gemäß einer vorteilhaften Ausgestaltung der Erfindung umfasst die Zielfunktion einen Term der Form $\xi^{loss} \cdot \sum_t \dot{Q}_t^{thermal}$ zur Minimierung der Speicherverluste, wobei $\xi^{loss}$ ein thermischer Gewichtungsfaktor ist.

Dadurch können vorteilhafterweise die Speicherverluste bei der Optimierung berücksichtigt und minimiert werden. Besonders bevorzugt umfasst die Zielfunktion somit den Term $\xi^{loss} \cdot \sum_t \dot{Q}_t^{thermal} + \xi^{wear} \cdot \sum_t y_t^{heat}$, sodass dieser minimiert wird. Hierbei können weitere multiplikative numerische Konstanten, beispielsweise die Zeitschrittweite der Optimierung $\Delta t$, vorgesehen sehen. Weiterhin werden der Verschleiß und die Speicherverluste verschieden durch ihre jeweiligen Gewichtungsfaktoren $\xi^{wear}$, $\xi^{loss}$ gewichtet. Alternativ oder ergänzend können beide Terme durch entsprechende Skalierungsfaktoren geteilt werden, sodass sie in derselben numerischen Größenordnung sind. Dadurch wird vorteilhafterweise die Numerik verbessert.

Die Lösung des oben genannten Optimierungsproblems umfasst somit eine optimale Trajektorie für den Stromverbrauch der Wärmeerzeugungsanlage, insbesondere der Wärmepumpe, für den Ladezustand des Speichers, für die Speicherbeladung und Speicherentladung bei einem möglichst geringem Verschleiß der Wärmeerzeugungsanlage.

In einer vorteilhaften Weiterbildung der Erfindung wird beim Optimierungsverfahren die weitere Nebenbedingung $P_t^{e,min} x_t^{heat} \leq P_t^e \leq P_t^{e,max} x_t^{heat}$ verwendet, wobei $P_t^{e,min}$ eine minimale Einschaltleistung und $P_t^{e,max}$ die Nennleistung der Wärmeerzeugungsanlage ist.

Dadurch werden vorteilhafterweise die technischen Leistungsgrenzen der Wärmeerzeugungsanlage beim Optimierungsverfahren berücksichtigt. Mit anderen Worten kann dadurch ein Ergebnis der Optimierung ermittelt werden, welches die technischen Leistungsgrenzen der Wärmeerzeugungsanlage respektiert.

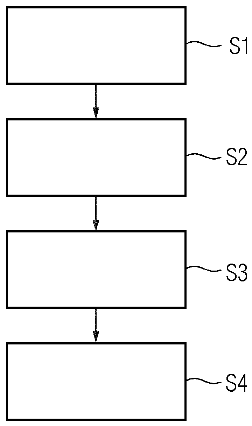

Weitere Vorteile, Merkmale und Einzelheiten der Erfindung ergeben sich aus den im Folgenden beschriebenen Ausführungsbeispielen sowie anhand der Zeichnung. Dabei zeigt die Figur schematisiert ein Ablaufdiagramm eines Verfahrens gemäß einer Ausgestaltung der vorliegenden Erfindung.

Gleichartige, gleichwertige oder gleichwirkende Elemente können in der Figur mit denselben Bezugszeichen versehen sein.

Dem vorliegenden Ausführungsbeispiel liegt ein Gebäude (Energiesystem) zugrunde, dass eine Wärmepumpe zur wenigstens teilweisen Deckung seines Wärmebedarfs umfasst. Weiterhin kann das Energiesystem einen mit der Wärmepumpe thermisch gekoppelten Energiespeicher, beispielsweise einen Wasserspeicher, umfassen.

Für das Energiesystem kann für einen zukünftigen Zeitbereich eine thermische Lastprognose ermittelt werden. Aus der ermittelten thermischen Lastprognose kann eine elektrische Lastprognose für die Wärmepumpe, beispielsweise über ihre Leistungszahl, ermittelt werden. Hierbei kann der thermische Energiespeicher berücksichtigt werden. Die dadurch ermittelte elektrische Lastprognose kann durch ein entsprechendes Angebot über einen lokalen Energiemarkt bezogen werden. Hierbei wird der lokale Energiemarkt durch eine bezüglich mehreren Energiesystemen zentrale Steuervorrichtung ausgebildet, die die Energieaustausche zwischen den Energiesystemen steuert. Hierzu ermittelt die Steuervorrichtung mittels eines numerischen Optimierungsverfahrens zeitabhängige Sollleistungen für jedes der Energiesysteme.

Gemäß einem ersten Schritt S1 des Verfahrens wird somit die elektrische Lastprognose für die Wärmepumpe zur wenigstens teilweisen Deckung der vorgesehenen thermischen Last ermittelt. Dadurch ist bekannt, welche elektrische Leistung zu welchem Zeitpunkt aus dem Stromnetz zu beziehen ist, damit die entsprechende thermische Last gedeckt wird.

In einem zweiten Schritt S2 des Verfahrens wird die bereitgestellte elektrische Lastprognose an die Steuervorrichtung des lokalen Energiemarktes übermittelt. Hierbei übermitteln alle am lokalen Energiemarkt teilnehmenden Energiesysteme ihre elektrischen Lastprognosen ebenfalls an die Steuervorrichtung. Die Steuervorrichtung bringt diese dann durch ein Optimierungsverfahren bezüglich einer Zielfunktion bestmöglich in Übereinstimmung.

Gemäß einem dritten Schritt S3 werden zu den Energieaustauschen zugehörige elektrischen Leistungen durch die Steuervorrichtung basierend auf den übermittelten vorgesehenen elektrischen Lastprognosen ermittelt, wobei das Ermitteln durch das Optimierungsverfahren mittels einem Minimieren einer zugehörigen Zielfunktion erfolgt. Hierbei ist die Zielfunktion derart ausgebildet beziehungsweise hinterlegt, dass wenigstens die Anzahl der Starts der Wärmepumpe zur Deckung der vorgesehenen thermischen Last minimiert wird. Dadurch wird vorteilhafterweise der Verschleiß der Wärmepumpe reduziert und dennoch kann die zeitliche Flexibilität der Wärmeerzeugung durch die Wärmepumpe, die typischerweise die Anzahl der Starts erhöht, genutzt werden und die thermische Last bestmöglich gedeckt werden.

In einem vierten Schritt S4 des Verfahrens werden schließlich die durch das Optimierungsverfahren ermittelten elektrischen Leistungen beziehungsweise Sollleistungen umgesetzt. Mit anderen Worten erfolgt das Steuern der Energieaustausche gemäß der ermittelten elektrischen Leistungen mittels der Steuervorrichtung. Dadurch erfolgen die Energieaustausche zwischen den Energiesystemen über das Stromnetz.

Obwohl die Erfindung im Detail durch die bevorzugten Ausführungsbeispiele näher illustriert und beschrieben wurde, so ist die Erfindung nicht durch die offenbarten Beispiele eingeschränkt oder andere Variationen können vom Fachmann hieraus abgeleitet werden, ohne den Schutzumfang der Erfindung zu verlassen.

Bezugszeichenliste

S1     erster Schritt
S2     zweiter Schritt
S3     dritter Schritt
S4     vierter Schritt

**Patentansprüche**

1. Verfahren zur Steuerung von Energieaustauschen zwischen mehreren Energiesystemen über ein Stromnetz mittels einer bezüglich den Energiesystemen zentralen Steuervorrichtung, wobei wenigstens eines der Energiesysteme eine Wärmeerzeugungsanlage umfasst, die elektrische Energie aus dem Stromnetz in Wärme wandelt, **gekennzeichnet durch** folgende Schritte:

   - (S1) Bereitstellen einer elektrischen Lastprognose $p_t^{\mathrm{e}}$ für die Wärmeerzeugungsanlage zur Deckung einer vorgesehenen thermischen Last $\dot{q}_t^{\mathrm{thermal}}$ ;

   - (S2) Übermitteln der bereitgestellten elektrischen Lastprognose $p_t^{\mathrm{e}}$ an die Steuervorrichtung, wobei die weiteren Energiesysteme ebenfalls jeweilige elektrische Lastprognosen an die Steuervorrichtung übermitteln;

   - (S3) Ermitteln von zu den Energieaustauschen zugehörigen elektrischen Leistungen $P_t^{\mathrm{e}}$ durch die Steuervorrichtung basierend auf den übermittelten vorgesehenen elektrischen Lastprognosen $p_t^{\mathrm{e}}$ , wobei das Ermitteln durch ein Optimierungsverfahren mittels einem Minimieren einer zugehörigen Zielfunktion erfolgt, und die Zielfunktion derart ausgebildet ist, dass die Anzahl der Starts $y_t^{\mathrm{heat}}$ der Wärmeerzeugungsanlage zur Deckung der vorgesehenen thermischen Last $\dot{q}_t^{\mathrm{thermal}}$ minimiert wird; und

   - (S4) Steuern der Energieaustausche gemäß der ermittelten elektrischen Leistungen $P_t^{\mathrm{e}}$ mittels der Steuervorrichtung.

2. Verfahren gemäß Anspruch 1, **gekennzeichnet dadurch, dass** die Wärmeerzeugungsanlage als Wärmepumpe ausgebildet ist.

3. Verfahren gemäß Anspruch 2, **gekennzeichnet dadurch, dass** die elektrische Lastprognose $p_t^{\mathrm{e}}$ aus einer thermischen Lastprognose $\dot{q}_t^{\mathrm{thermal}}$ gemäß $p_t^{\mathrm{e}} = \dot{q}_t^{\mathrm{thermal}}/\mathrm{COP}_t$ ermittelt wird, wobei $\mathrm{COP}_t$ die Leistungszahl der Wärmepumpe ist.

4. Verfahren gemäß Anspruch 3, **gekennzeichnet dadurch, dass** eine Außentemperatur erfasst wird und die Leistungszahl $\mathrm{COP}_t$ in Abhängigkeit der erfassten Außentemperatur bestimmt wird.

5. Verfahren gemäß einem der vorhergehenden Ansprüche, **gekennzeichnet dadurch, dass** die Zielfunktion einen

Term der Form $\xi^{\text{wear}} \cdot \sum_t y_t^{\text{heat}}$ zur Minimierung der Anzahl der Starts $y_t^{\text{heat}}$ umfasst, wobei $\xi^{\text{wear}}$ ein Verschleißfaktor und $y_t^{\text{heat}}$ als binäre Variable ausgebildet ist, die die Anzahl der Starts kennzeichnet.

6. Verfahren gemäß Anspruch 5, **gekennzeichnet dadurch, dass** weitere binäre Variablen $x_t^{\text{heat}}$ und $z_t^{\text{heat}}$ beim Optimierungsverfahren verwendet werden, wobei $x_t^{\text{heat}}$ den Betriebsstatus der Wärmeerzeugungsanlage und $z_t^{\text{heat}}$ die Anzahl der Stopps der Wärmeerzeugungsanlage kennzeichnet, und die Nebenbedingungen $x_t^{\text{heat}} - x_{t-1}^{\text{heat}} = y_t^{\text{heat}} - z_t^{\text{heat}}$ und $y_t^{\text{heat}} + z_t^{\text{heat}} \leq 1$ beim Optimierungsverfahren verwendet werden.

7. Verfahren gemäß einem der vorhergehenden Ansprüche, **gekennzeichnet dadurch, dass** das Energiesystem zusätzlich einen mit der Wärmeerzeugungsanlage thermisch gekoppelten Wärmespeicher umfasst, wobei die Zielfunktion derart ausgebildet ist, dass Speicherverluste des Wärmespeichers minimiert werden.

8. Verfahren gemäß Anspruch 7, **gekennzeichnet dadurch, dass** die Zielfunktion einen Term der Form $\xi^{\text{loss}} \cdot \sum_t \dot{Q}_t^{\text{thermal}}$ zur Minimierung der Speicherverluste umfasst, wobei $\xi^{\text{loss}}$ ein thermischer Gewichtungsfaktor ist.

9. Verfahren gemäß einem der vorhergehenden Ansprüche, **gekennzeichnet dadurch, dass** beim Optimierungsverfahren die weitere Nebenbedingung $P_t^{\text{e,min}} x_t^{\text{heat}} \leq P_t^{\text{e}} \leq P_t^{\text{e,max}} x_t^{\text{heat}}$ verwendet wird, wobei $P_t^{\text{e,min}}$ eine minimale Einschaltleistung und $P_t^{\text{e,max}}$ die Nennleistung der Wärmeerzeugungsanlage ist.

10. Steuervorrichtung zur Steuerung von Energieaustauschen zwischen mehreren Energiesystemen über ein Stromnetz, wobei wenigstens eines der Energiesysteme eine Wärmeerzeugungsanlage umfasst, die elektrische Energie aus dem Stromnetz in Wärme wandelt, **dadurch gekennzeichnet, dass** die Steuervorrichtung dazu ausgebildet und eingerichtet ist:

- eine für die Wärmeerzeugungsanlage bereitgestellte elektrische Lastprognose $p_t^{\text{e}}$ zur Deckung einer vorgesehenen thermischen Last $\dot{q}_t^{\text{thermal}}$ zu empfangen sowie weitere jeweilige elektrische Lastprognosen von den weiteren Energiesystemen zu empfangen;

- zu den Energieaustauschen zugehörige elektrische Leistungen $P_t^{\text{e}}$ basierend auf den übermittelten vorgesehenen elektrischen Lastprognosen $p_t^{\text{e}}$ zu ermitteln, wobei das Ermitteln durch ein Optimierungsverfahren mittels einem Minimieren einer zugehörigen Zielfunktion erfolgt, und die Zielfunktion derart ausgebildet ist, dass die Anzahl der Starts $y_t^{\text{heat}}$ der Wärmeerzeugungsanlage zur Deckung der vorgesehenen thermischen Last $\dot{q}_t^{\text{thermal}}$ minimiert wird; und

- die Energieaustausche gemäß der ermittelten elektrischen Leistungen $P_t^{\text{e}}$ zu steuern.

Europäisches
Patentamt
European
Patent Office
Office européen
des brevets

**EUROPÄISCHER RECHERCHENBERICHT**

**Nummer der Anmeldung**

**EP 22 18 7565**

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| Y | DE 10 2020 212610 A1 (SIEMENS AG [DE]) 7. April 2022 (2022-04-07) | 1-5,7-10 | INV. H02J3/00 |
| A | * Abbildung 1 * * Absätze [0019], [0020] - [0022], [0024], [0026], [0044], [0050] - [0054] * | 6 | H02J3/14 H02J13/00 H02J3/06 |
| | ----- | | |
| Y | EP 3 196 558 A1 (SHARP KK [JP]) 26. Juli 2017 (2017-07-26) * Absatz [0052] * | 1-5,7-10 | |
| | ----- | | |
| Y | ZHOU JINZHI ET AL: "Experimental investigation of a solar driven direct-expansion heat pump system employing the novel PV/micro-channels-evaporator modules", APPLIED ENERGY, ELSEVIER SCIENCE PUBLISHERS, GB, Bd. 178, 25. Juni 2016 (2016-06-25), Seiten 484-495, XP029679203, ISSN: 0306-2619, DOI: 10.1016/J.APENERGY.2016.06.063 * Seite 492 * * Tabelle 10 * | 3,4 | |
| | ----- | | **RECHERCHIERTE SACHGEBIETE (IPC)** |
| A | DE 10 2020 208662 A1 (SIEMENS AG [DE]) 13. Januar 2022 (2022-01-13) * Abbildung 2 * * Absatz [0052] * | 4 | H02J |
| | ----- | | |

Der vorliegende Recherchenbericht wurde für alle Patentansprüche erstellt

| Recherchenort | Abschlußdatum der Recherche | Prüfer |
|---|---|---|
| München | 10. Februar 2023 | Zettler, Karl-Rudolf |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

.............................................................................
& : Mitglied der gleichen Patentfamilie, übereinstimmendes Dokument

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 22 18 7565

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

10-02-2023

| Im Recherchenbericht angeführtes Patentdokument | Datum der Veröffentlichung | Mitglied(er) der Patentfamilie | Datum der Veröffentlichung |
|---|---|---|---|
| DE 102020212610 A1 | 07-04-2022 | DE 102020212610 A1<br>WO 2022073667 A1 | 07-04-2022<br>14-04-2022 |
| EP 3196558 A1 | 26-07-2017 | EP 3196558 A1<br>US 2017211862 A1 | 26-07-2017<br>27-07-2017 |
| DE 102020208662 A1 | 13-01-2022 | DE 102020208662 A1<br>WO 2022008141 A1 | 13-01-2022<br>13-01-2022 |

EPO FORM P0461

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 3518369 A1